# EUROPÄISCHE PATENTSCHRIFT

(11) **EP 3 273 401 B1**
(45) Veröffentlichungstag und Bekanntmachung des Hinweises auf die Patenterteilung: **20.10.2021**
(21) Anmeldenummer: 17181893.3
(22) Anmeldetag: 18.07.2017
(51) Int. Cl.: G06Q 30/06, G06Q 10/08

(54) **VORRICHTUNG UND VERFAHREN ZUM ÜBERTRAGEN VON DATEN AN EIN ELEKTRONISCHES SYSTEM**
DEVICE AND METHOD FOR TRANSMITTING DATA TO AN ELECTRONIC SYSTEM
DISPOSITIF ET PROCÉDÉ DE TRANSMISSION DE DONNÉES A UN SYSTÈME ÉLECTRONIQUE

(30) Priorität: 19.07.2016 EP 16180145
(43) Veröffentlichungstag der Anmeldung: 24.01.2018
(73) Patentinhaber: Die Schweizerische Post AG, 3030 Bern (CH)
(72) Erfinder: Auer, Thomas, 3019 Bern (CH)
(74) Vertreter: Keller Schneider Patent- und Markenanwälte AG (Bern)

(56) Entgegenhaltungen:
- EP-A1- 1 118 966
- EP-A1- 1 901 213
- EP-A1- 2 312 509
- WO-A2-2006/077473
- US-A1- 2010 134 251
- US-A1- 2015 105 880
- US-A1- 2015 106 228
- C. Schondorfer: "Würth Industrie Service CPS RFID Radio Frequency Identification", , 1. Februar 2016 (2016-02-01), XP055327706, Gefunden im Internet: URL:http://www.wuerth-industry.co.kr/web/m edia/de/pictures/wuerthindustrie/unternehm en/download_center/Broschuere_CPS_RFID_DE_ 02-2016.pdf [gefunden am 2016-12-09]
- Brian Dipert: "Teardown: Amazon Dash Button keeps you connected", , 4. März 2016 (2016-03-04), XP055326118, Gefunden im Internet: URL:http://www.edn.com/Pdf/ViewPdf?content ItemId=4441569 [gefunden am 2016-12-05]

## Beschreibung

### Technisches Gebiet

Die Erfindung betrifft eine Vorrichtung sowie ein Verfahren zum Übertragen von Daten an ein elektronisches System, insbesondere zum Übertragen einer Produktnummer an ein elektronisches Bestellsystem.

### Stand der Technik

Der elektronische Handel erfreut sich einer immer grösseren Beliebtheit. Eine häufige Bestellung desselben Artikels ist jedoch nach wie vor mühsam, da ein Kunde jedes Mal die Webseite des Verkäufers aufrufen, den Artikel auf der Webseite suchen und anschliessend den Bestellvorgang manuell auslösen muss. Zwar existieren bei einigen Anbietern verfahren, bei denen ein Artikel mit nur einem Maus-Click bestellt werden kann, allerdings muss ein Kunde den Artikel immer noch auf der Webseite des Anbieters manuell suchen.

Um eine möglichst einfache Handhabung von Bestellung immer desselben Artikels zu erleichtern, sind im Stand der Technik einige Lösungen vorbekannt.

Die US 2015/0332382 A1 (Panasonic) beschreibt zum Beispiel ein Datenverarbeitungssystem zum Durchführen eines Bestellvorgangs. Das System ist mit einer oder mehreren Bestellvorrichtungen verbunden, mit denen eine bestimmte Bestellung ausgelöst werden kann und verfügt über ein oder mehrere Terminals mit einem Bildschirm. Beim Auslösen einer Bestellung durch eine Bestellvorrichtung wird auf einem dieser zugeordneten Terminal eine Bestätigung angezeigt sowie eine Widerrufsfrist ausgelöst, in welcher die Bestellung widerrufen werden kann. Die Bestellvorrichtung kann einen Druckknopf, einen Speicher sowie eine Kommunikationseinheit umfassen, wobei durch Drücken des Druckknopfes im Speicher gespeicherte Daten über die Kommunikationseinheit an einen Server übermittelt werden. Die Daten enthalten dabei Informationen zu einem zu bestellenden Produkt.

Die US 2015/106228 A1 (G. S. Shuster) betrifft Verfahren und Systeme zur Vereinfachung von Nachbestellungen für Verbrauchsmaterial. Hierbei wird ein Gerät, welches eine Referenz auf Bestellungsdaten codiert, mit dem Verbrauchsmaterial ausgeliefert. Zur Nachbestellung kann das Gerät mit einer Vorrichtung verbunden werden, welche die codierte Referenz ausliest und an den Dienstleister übermittelt, wonach automatisch ein Bestellvorgang ausgelöst wird. Ein Bestellvorgang kann auch ausgelöst werden, wenn ein Sensor des Geräts einen bestimmten Mindestfüllstand des Verbrauchsmaterials misst.

Die US 8,490,871 B1 (Amazon) beschreibt Verfahren zur Nachbestellung von Produkten, bei welchen ein maschinenlesbarer Code, der einem bestimmten Produkt sowie dem Kunden zugeordnet ist, mittels eines mobilen Geräts eingelesen wird, um eine Nachbestellung auszulösen Ist das gewünschte Produkt nicht verfügbar, wird dem Besteller ein Alternativprodukt vorgeschlagen.

Die EP 2 299 398 A1 betrifft ein Verfahren und ein System zum Aufgeben von Bestellungen via Internet. Dabei wird das Client-System des Bestellers über eine Identifikation erkannt, mit einem einzigen Mausklick kann dann der Besteller die Bestellung eines angezeigten Produkts auslösen. Beim Server wird die Identifikation weiteren Nutzerinformationen (z. B. der Adresse, Zahlungsinformationen usw.) zugeordnet.

Die Firma Amazon® hat unter dem Namen "Dash Button" eine Vorrichtung auf den Markt gebracht, mit welcher eine Bestellung für ein bestimmtes Produkt eines Anbieters per Knopfdruck ausgelöst werden kann. Die Vorrichtung muss zunächst über ein weiteres mobiles Gerät konfiguriert werden, was die Inbetriebnahme aufwändig gestaltet. Ferner kann über eine Vorrichtung jeweils nur für ein einziges Produkt eine Bestellung ausgelöst werden.

Die US 2010/134251 A1 beschreibt ein System für das Auffüllen eines Lagers nach dem Zweikübelprinzip, wobei auf jedem Kübel jeweils ein abnehmbarer RFID-Tag angebracht ist, welcher von einem Behälter auf eine Nachfüllanzeige übertragbar ist, sobald der jeweilige Kübel leer ist, wobei die Nachfüllanzeige die auf ihr aufgebrachten RFID-Tags ausliest und entsprechende Nachfüllaufträge an ein zentrales System überträgt. Die Nachfüllaufträge können auf mehrere Arten an das zentrale System übertragen werden, zum Beispiel drahtlos, über ein Intranet oder über das Internet. Die RFID-Tags können auf vielfältige Weise auf der Nachfüllanzeige angebracht werden, diese können beispielsweise in Schlitze oder Taschen eingeführt oder mittels Klettverschluss auf einer Oberfläche befestigt werden.

### Darstellung der Erfindung

Aufgabe der Erfindung ist es, eine dem eingangs genannten technischen Gebiet zugehörende Vorrichtung zu schaffen, welche eine möglichst einfache Übertragung von Daten an ein elektronisches System ermöglicht, wobei die zu übertragenden Daten auf möglichst einfache Weise individuell angepasst werden können.

Die Lösung der Aufgabe ist durch die Merkmale des Anspruchs 1 definiert. Gemäss der Erfindung umfasst eine Vorrichtung zum Übertragen von Daten an ein elektronisches System ein Gehäuse mit mindestens einer Taste, eine Steuerungseinheit mit wenigstens einem drahtlosen Kommunikationsmodul, mit welchem die Vorrichtung Daten an das elektronische System übertragen kann, sowie mindestens eine Leseeinrichtung für Codierkarten. Das Gehäuse weist wenigstens einen Befestigungsbereich zum lösbaren Befestigen einer Codierkarte auf, wobei die Steuerungseinheit derart ausgebildet ist, dass diese mittels der mindestens einen Leseeinrichtung Daten aus einer am wenigstens einen Befestigungsbereich angebrachten Codierkarte ausliest und diese bei einem Druck auf die Taste mittels des drahtlosen Kommunikationsmoduls an das elektronische System übermittelt. Vorzugsweise erfolgt die Übertragung einer Produktnummer an ein elektronisches Bestellsystem. Der mindestens eine Befestigungsbereich ist auf einer Oberfläche der mindestens einen Taste angeordnet.

Mit der erfindungsgemässen Vorrichtung kann ein Benutzer durch Anbringen unterschiedlicher Codierkarten die zu übermittelnden Daten sehr schnell und einfach verändern. So kann beispielsweise durch einen Wechsel einer auf dem wenigstens einen Befestigungsbereich angebrachten Codierkarte mit der erfindungsgemässen Vorrichtung eine Bestellung für ein anderes Produkt ausgelöst werden. Hierbei ist keinerlei Konfiguration oder Programmierung der Vorrichtung oder einer anderen Komponente des elektronischen Systems notwendig.

Vorzugsweise handelt es sich beim elektronischen System um ein Bestellsystem eines Händlers. In einer Ausführungsform umfasst das elektronische System ferner ein Verarbeitungssystem eines Vermittlers, welches die übertragenen Daten empfängt, verarbeitet und anschliessend in veränderter oder unveränderter Form an ein Bestellsystem eines Händlers weiterleitet. In der vorliegenden Anmeldung wird als "Vermittler" eine Person oder Firma verstanden, welche Dienstleistungen zwischen Kunden und Händlern vermittelt.

Die Übermittlung erfolgt vorzugsweise über mindestens ein Datennetzwerk, insbesondere über ein Mobilfunknetzwerk oder über das Internet. Vorzugsweise erfolgt die Übermittlung über eine Abfolge von Datennetzwerken, beispielsweise von der Vorrichtung über ein "wireless local access network" (WLAN) zu einem Router und anschliessend vom Router zum elektronischen System über das Internet.

Daher ist das drahtlose Kommunikationsmodul vorzugsweise zur Übermittlung von Daten mittels Funkwellen ausgebildet. Alternativ kann das drahtlose Kommunikationsmodul jedoch auch derart ausgestaltet sein, dass diese Daten auf eine andere Weise drahtlos an einen Empfänger übermitteln kann, beispielsweise mittels Infrarotstrahlung, Tonsignalen oder Ultraschall. Der Empfänger ist dann vorzugsweise in der Lage, die empfangenen Daten an mindestens ein Datennetzwerk weiterzuleiten.

Das Gehäuse kann eine beliebige Form aufweisen, wie beispielsweise quaderförmig oder polyedrisch. Das Gehäuse ist vorzugsweise aus einem Polymer hergestellt, insbesondere einem thermoplastischen Polymer, wie zum Beispiel Acrylnitril-Butadien-Styrol (ABS), Polyvinylchlorid (PVC), Polycarbonat, Polyethylen oder Polypropylen. Alternativ kann das Gehäuse jedoch auch aus einem anderen, geeigneten Material hergestellt sein, beispielsweise aus einem Metall.

Die mindestens eine Taste ist insbesondere als Druckknopf ausgestaltet. Als "Taste" im Sinne der vorliegenden Anmeldung wird eine definierte Fläche verstanden, welche durch Berührung eines Benutzers ein elektrisches Signal auszulösen vermag. Nebst dem erwähnten Druckknopf kann die mindestens eine Taste beispielsweise auch als Kippschalter oder Touchscreen ausgestaltet sein. Die mindestens eine Taste ist vorzugsweise an einer Aussenseite des Gehäuses angeordnet. Alternativ kann auch mindestens eine Aussenfläche oder ein Teil mindestens einer Aussenfläche des Gehäuses relativ zum Rest des Gehäuses beweglich ausgebildet sein und als Taste dienen. Die Vorrichtung kann über eine beliebige Anzahl an Tasten verfügen. Insbesondere bevorzugt verfügt die Vorrichtung jedoch über 1 bis 5 Tasten.

Die Steuerungseinheit ist elektrisch mit der mindestens einen Taste, dem wenigstens einen drahtlosen Kommunikationsmodul sowie der mindestens einen Leseeinrichtung verbunden. Die Steuerungseinheit verfügt vorzugsweise über eine elektronische Schaltung, mit welcher die erwähnten Komponenten der Vorrichtung angesteuert werden können. Zur Stromversorgung der Steuerungseinheit und der weiteren Komponenten der Vorrichtung ist im Gehäuse vorzugsweise mindestens eine Energiequelle angeordnet. Als Energiequelle wird vorzugsweise eine Batterie, ein Akkumulator, eine Solarzelle oder ein piezoelektrischer Nanogenerator verwendet.

Durch die Anordnung des Befestigungsbereichs auf der mindestens einen Taste wird für einen Benutzer schnell ersichtlich, welche Codierkarte der mindestens einen Taste zugeordnet ist, insbesondere wenn die Codierkarte eine eindeutige Kennzeichnung aufweist, beispielsweise ein Schriftzug oder ein Bild, welche mit den auf der Codierkarte hinterlegten oder gespeicherten Daten in Zusammenhang steht.

Eine derartige Anordnung des Befestigungsbereichs ist insbesondere bei der Verwendung einer erfindungsgemässen Vorrichtung zum Übertragen einer Produktnummer an ein elektronisches Bestellsystem vorteilhaft, da auf der Codierkarte das Bild oder der Markenname des Produkts aufgedruckt sein kann. So kann ein Benutzer der Vorrichtung jederzeit auf einen Blick erkennen, für welches Produkt mit einer bestimmten Taste die Produktnummer an das elektronische Bestellsystem übermittelt wird.

Der wenigstens eine Befestigungsbereich verfügt über geeignete Mittel, um eine Codierkarte lösbar auf oder mit diesem zu befestigen.

Vorzugsweise ermöglichen die Mittel eine vorübergehende, lösbare Befestigung einer Codierkarte auf oder mit dem Befestigungsbereich.

Die Steuerungseinheit ist vorzugsweise derart ausgestaltet, dass beim Befestigen einer Codierkarte an oder mit dem mindestens einen Befestigungsbereich die Daten automatisch ausgelesen und vorzugsweise in einem Speichermodul der Steuerungseinheit gespeichert werden. Dies kann beispielsweise durch eine periodische Leseabfrage durch die Leseeinrichtung sichergestellt werden, z.B. im Abstand von 60 Minuten oder 30 Minuten. Alternativ kann die Steuerungseinheit auch derart ausgestaltet sein, dass ein Auslesen einer Codierkarte mittels der wenigstens einen Leseeinrichtung nur nach Empfang eines entsprechenden Steuersignals ausgelöst wird. Ein Steuersignal kann durch eine bestimmte Handlung eines Benutzers der Vorrichtung erzeugt werden, beispielsweise durch Betätigen der mindestens einen Taste für eine bestimmte Zeitdauer, z.B. länger als 5 Sekunden. Falls die Vorrichtung über mehr als eine Taste verfügt, kann ein Steuersignal insbesondere durch gleichzeitiges Betätigen von mehr als einer Taste erzeugt werden.

Die Codierkarte verfügt über Mittel, mit denen die Daten auf der Codierkarte hinterlegt werden können. Dabei kann es sich um mechanische Mittel, wie zum Beispiel einer Lochmatrix oder Aussparungen an mindestens einer Kante der Codierkarte handeln. Dementsprechend verfügt die mindestens eine Leseeinrichtung über einen optischen Sensor, mit welchem die Lochmatrix oder die Aussparungen erfasst werden können oder über mechanische Schalter, die durch die Lochmatrix oder die Aussparungen geschlossen oder geöffnet werden. Je nachdem, in welchem Muster die Lochmatrix oder die Aussparungen angeordnet sind, lassen sich unterschiedliche Daten hinterlegen.

Ferner kann die Codierkarte auch über mindestens einen Magnetstreifen verfügen, auf dem die Daten gespeichert sind. Weiter kann auf der Codierkarte auch ein Speicherchip zur Speicherung der Daten angeordnet sein, wobei das Auslesen des Chips entweder über elektrische Kontakte oder drahtlos erfolgt.

Die Codierkarte ist vorzugsweise aus Papier, Karton oder einem Polymer, insbesondere Polyethylenterephthalat (PET) gefertigt. Auf der Codierkarte sind vorzugsweise Informationen aufgedruckt, wie zum Beispiel die Art der Daten, die auf der Codierkarte hinterlegt sind. Ferner kann auf der Codierkarte auch der Name oder das Logo eines Dienstleisters aufgedruckt sein, beispielsweise eines Händlers oder eines Vermittlers.

Vorzugsweise ist die mindestens eine Leseeinrichtung eine Leseeinrichtung für RFID Transponder, welche die Daten aus einer am wenigstens einen Befestigungsbereich angebrachten Codierkarte, die als RFID-Transponder ausgestaltet ist, ausliest.

Leseeinrichtungen für RFID (radio-frequency identification) Transponder sind im Stand der Technik bekannt. Vorzugsweise ist die Leseeinrichtung eine Leseeinrichtung für passive RFID-Transponder. Dies erlaubt das Auslesen von einfachen, passiven RFID-Transponder, welche über keine eigene Energiequelle verfügen müssen. Alternativ verfügt die Vorrichtung jedoch auch über mindestens eine Leseeinrichtung für semi-passive oder aktive RFID-Transponder. Unter dem Begriff "RFID-Transponder" fallen im Rahmen der vorliegenden Erfindung auch Transponder, welche Daten gemäss dem Nahfeldkommunikationsübertragungsstandard ("near field communication", NFC) übertragen können. Unter dem Begriff "RFID-Transponder" wird in der vorliegenden Anmeldung insbesondere eine Einheit verstanden, welche durch Modulation von magnetischen Wechselfeldern, die von einer Leseeinrichtung erzeugt werden, Daten an diese Leseeinrichtung übermitteln können.

Alternativ bevorzugt weist die mindestens eine Leseeinrichtung Kontaktpunkte aus einem elektrisch leitfähigen Material auf, welche zumindest teilweise mit elektrisch leitenden Flächen einer am wenigstens einen Befestigungsbereich angebrachten Codierkarte in Berührung stehen.

Vorzugsweise wird mindestens ein spezifischer Kontaktpunkt der Leseeinrichtung mit Strom beaufschlagt. Über die Berührung einer entsprechenden ersten elektrisch leitenden Fläche auf der Codierkarte wird der Strom auf die Codierkarte geleitet. Vorzugsweise ist diese erste elektrisch leitende Fläche mittels Leiterbahnen mit einer Anzahl spezifischer weiterer elektrisch leitender Flächen der Codierkarte verbunden. Dadurch fliesst der Strom von der ersten elektrisch leitenden Fläche zu dieser Anzahl spezifischer elektrisch leitender Flächen. Diese wiederum stehen in Berührung mit Kontaktpunkten der Leseeinrichtung und leiten so den Strom auf diese Kontaktpunkte weiter. Die Steuerungseinheit kann auslesen, welche dieser Kontaktpunkte einen Stromfluss aufweisen. Anhand der Anzahl und der spezifischen Kombination der einen Stromfluss aufweisenden Kontaktpunkte kann die Steuerungseinheit die Daten auslesen. Das heisst, dass durch die Einspeisung des Stroms über die erste elektrisch leitende Fläche der Codierkarte der Strom auf weitere elektrisch leitende Flächen weitergeleitet wird, die in einem bestimmten Muster angeordnet sind. Dieses Muster codiert für bestimmte Daten. Beispielsweise lässt sich derart ein Binärcode auslesen. Um den Informationsgehalt einer derartigen Codierkarte zu erhöhen, können einzelne Leiterbahnen zusätzlich mit unterschiedlichen Widerständen bestückt werden, wobei die Steuerungseinheit zusätzlich bei allen Kontaktpunkten die Spannung oder Stromstärke misst. Dadurch können je nach gemessener Spannung oder Stromstärke über eine einzelne elektrisch leitende Fläche unterschiedliche Informationen übertragen werden. Die Codierkarte codiert demnach über die Anzahl und Anordnung sowie allenfalls über die Widerstände der Leiterbahnen die durch die Leseeinheit ausgelesenen Daten.

Die Kontaktpunkte der Leseeinrichtung beziehungsweise die elektrisch leitenden Flächen auf der Codierkarte sind vorzugsweise in der Form einer zweidimensionalen Matrix angeordnet. Alternativ können die Kontaktpunkte beziehungsweise die elektrisch leitenden Flächen auch in einer oder mehreren Reihen angeordnet sein. Je höher die Anzahl an Kontaktpunkten und elektrisch leitenden Flächen desto höher der Informationsgehalt der Daten, die auf der Codierkarte hinterlegt werden können.

Ferner kann auch vorgesehen sein, dass mehr als nur ein Kontaktpunkt mit einem Strom beaufschlagt wird.

Die Leiterbahnen werden vorzugsweise auf die Codierkarte mit einer elektrisch leitfähigen Tinte aufgedruckt. Alternativ können die Leiterbahnen auch mit elektrisch leitfähiger Tinte auf eine Folie gedruckt werden, welche anschliessend auf eine Trägerkarte geklebt wird. Trägerkarte und Folie bilden dann zusammen die Codierkarte.

Alternativ können die elektrisch leitfähigen Flächen und die Leiterbahnen aus einem Metall, beispielsweise einer Metallfolie, hergestellt und auf die Codierkarte oder auf eine Folie angebracht werden. Die elektrisch leitfähigen Flächen und die Leiterbahnen können beispielsweise aus dem Metall oder der Metallfolie geschnitten, gestanzt, geätzt oder auf eine dem Fachmann sonst bekannte Art hergestellt werden.

Die Steuerungseinheit ist vorzugsweise derart ausgebildet, dass diese bei einem Druck auf die Taste mittels der Leseeinrichtung Daten aus einer am wenigstens einen Befestigungsbereich angebrachten Codierkarte ausliest und diese mittels des drahtlosen Kommunikationsmoduls an das elektronische System übermittelt.

Dies ermöglicht eine möglichst einfache Handhabung der Vorrichtung, da bei einem Auswechseln einer auf dem Befestigungsbereich angeordneten Codierkarte keine Handlung vorgenommen werden muss, um die neuen Daten einzulesen. Auch entfällt ein energieaufwändiges, periodisches Auslesen der Codierkarte durch die Leseeinrichtung.

Der mindestens eine Befestigungsbereich ist vorzugsweise als eine zum Aufkleben einer mit einer Klebefläche versehenen Codierkarte ausgebildete Oberfläche ausgestaltet.

Dadurch können als Klebeetiketten ausgestaltete Codierkarten schnell und einfach auf dem mindestens einen Befestigungsbereich aufgeklebt werden. Vorzugsweise ist die Oberfläche derart ausgebildet, dass sich eine entsprechende Codierkarte auch wieder einfach und zerstörungsfrei vom Befestigungsbereich lösen lässt.

Alternativ verfügt der mindestens eine Befestigungsbereich über Formschlusselemente, insbesondere über Nuten, mit denen sich eine Codierkarte formschlüssig am Gehäuse lösbar befestigen lässt.

Die Formschlusselemente sind vorzugsweise derart ausgestaltet, dass sich eine Codierkarte einfach in diese einschieben und wieder herausschieben lässt.

Vorzugsweise ist am Gehäuse eine Anzeigevorrichtung angeordnet, welche von der Steuerungseinheit angesteuert wird, um einem Benutzer den Status der Übermittlung der Daten anzuzeigen, insbesondere die erfolgreiche Übermittlung der Daten an das elektronische System.

Vorzugsweise ist die Anzeigevorrichtung eine optische Anzeige, beispielsweise eine Leuchtdiode. Ferner kann die Anzeigevorrichtung jedoch auch ein akustisches oder haptisches Signal aussenden, um den Status der Übermittlung der Daten anzuzeigen. Eine erfolgreiche Datenübermittlung kann beispielsweise durch eine aufleuchtende grüne Leuchtdiode, einen bestimmten Ton oder Tonfolge oder durch eine Vibrationssequenz angezeigt werden. War die Datenübertragung nicht möglich, beispielsweise weil keine Verbindung zum elektronischen System aufgenommen oder keine Daten aus der Codierkarte ausgelesen werden konnten, so kann dies beispielsweise durch eine aufleuchtende rote Leuchtdiode, einen bestimmten zweiten Ton oder durch eine zweite Vibrationssequenz angezeigt werden.

Alternativ kann als Anzeigevorrichtung auch einen LCD-Anzeige oder eine Anzeige mit elektronischem Papier verwendet werden. Bei einer derartigen Anzeigevorrichtung können noch weitere Informationen angezeigt werden, beispielsweise die übertragenen Daten oder der Ladungszustand einer Stromquelle.

Vorzugsweise ist die Steuerungseinheit derart ausgestaltet, dass diese zusätzlich Identifikationsdaten, welche der Vorrichtung zugeordnet sind, mit den von der Codierkarte ausgelesenen Daten an das elektronische System übermittelt.

Durch die übermittelten Identifikationsdaten kann das elektronische System die übertragenen Daten eindeutig einer Vorrichtung zuordnen. Vorzugsweise ist im elektronischen System eine Datenbank hinterlegt, welche eine Verknüpfung der Identifikationsdaten mit persönlichen Daten von Benutzern ermöglicht. So kann das elektronische System erkennen, von welchem Benutzer die Daten übermittelt werden. Dadurch kann beispielsweise bei der Verwendung der Vorrichtung zur Übermittlung einer Produktnummer an ein elektronisches Bestellsystem festgestellt werden, welcher Benutzer welches Produkt mittels der Vorrichtung bestellt hat.

Das wenigstens eine drahtlosen Kommunikationsmodul ermöglicht vorzugsweise eine Datenübertragung mittels Funkwellen, insbesondere gemäss dem IEEE 802.11 Standard, dem IEEE 802.15.1 Standard und/oder gemäss dem Long Range Wide Area Network Standard.

Der IEEE 802.11 Standard ist unter dem Namen Wireless-Lan oder WiFi bekannt und entsprechende Access-Points sind weitverbreitet. Der IEEE 802.15.1 Standard ist unter dem Namen Bluetooth bekannt und im Bereich mobile Kommunikation weit verbreitet. Die Verwendung mindestens eines dieser Datenübertragungsstandards gewährleistet somit eine möglichst breite Kompatibilität der Vorrichtung. Im Rahmen der vorliegenden Anmeldung werden unter dem Begriff "IEEE 802.11 Standard" alle Normen gemäss IEEE 802.11 sowie deren Erweiterungen erfasst. Ferner werden in der folgenden Anmeldung unter dem Begriff "IEEE 802.15.1 Standard" alle Versionen der Bluetooth Core Spezifikationen umfasst.

Der Long Range Wide Area Network (LoRaWAN) Standard ist eine durch die LoRa® Allianz festgelegte Spezifikation für ein niederenergetisches Wide Area Network für kabellose, batteriebetriebene Objekte. Die Verwendung des LoRaWAN Standards hat den Vorteil, dass nur ein niedriger Energieverbrauch für die Datenübertragung an das elektronische System nötig ist.

Vorzugsweise verfügt die Vorrichtung über mehr als ein drahtloses Kommunikationsmodul, wobei die Kommunikationsmodule bevorzugt eine Datenübertragung über Funkwellen nach unterschiedlichen Datenübertragungsstandards ermöglichen. Alternativ kann die Vorrichtung jedoch auch über ein drahtloses Kommunikationsmodul verfügen, welches eine Datenübertragung über Funkwellen gemäss mehr als einem Datenübertragungsstandard ermöglicht.

Vorzugsweise verfügt die Vorrichtung über mindestens zwei Tasten, wobei jeder Taste auf dem Gehäuse ein Befestigungsbereich sowie eine Leseeinrichtung für eine Codierkarte zugeordnet ist, und wobei die Leseeinrichtungen derart angeordnet und ausgestaltet sind, dass jede Leseeinrichtung jeweils nur Daten von einem der entsprechenden Taste zugeordneten Befestigungsbereich angebrachten Codierkarte ausliest.

Dadurch kann die Vorrichtung zur Übertragung unterschiedlicher Daten verwendet werden, wobei bei Betätigung einer Taste nur diejenigen Daten an das elektronische System übermittelt werden, welche von einer Codierkarte ausgelesen wurden, welche an oder auf dem der Taste entsprechenden Befestigungsbereich angebracht ist.

Somit kann eine erfindungsgemäss Vorrichtung beispielsweise zur Übermittlung von unterschiedlichen Produktnummern an ein elektronisches Bestellsystem verwendet werden.

Die vorliegende Anmeldung betrifft ferner ein Verfahren zum Übertragen von Daten an ein elektronisches System, insbesondere zum Übertragen einer Produktnummer an ein elektronisches Bestellsystem. In einem ersten Schritt wird eine Codierkarte auf einen Befestigungsbereich einer Vorrichtung, insbesondere einer Vorrichtung gemäss der vorliegenden Erfindung, befestigt,
wobei der Befestigungsbereich auf einer Oberfläche mindestens einer Taste der Vorrichtung angeordnet ist und wobei auf der Codierkarte Daten, insbesondere Daten zu einem Produkt, gespeichert sind.

Die Daten werden anschliessend durch eine Steuerungseinheit der Vorrichtung mittels einer Leseeinrichtung für Codierkarten ausgelesen. Bei Betätigung eine Taste der Vorrichtung erfolgt eine Übermittlung der ausgelesenen Daten durch die Steuerungseinheit an das elektronische System mittels wenigstens eines drahtlosen Kommunikationsmoduls.

Mit dem erfindungsgemässen Verfahren werden vorzugsweise Waren bestellt, das heisst, dass das elektronische System ein Bestellsystem eines Händlers ist. Alternativ bevorzugt kann mit dem erfindungsgemässen Verfahren jedoch auch eine Dienstleistung bestellt werden. Eine erfindungsgemässe Vorrichtung zum Übertragen von Daten kann beispielsweise in einem Fahrstuhl oder in einem Flur eines Gebäudes an einer Wand befestigt sein, wobei durch Drücken der mindestens einen Taste ein Auftrag zum Erbringen einer Dienstleistung an einen Dienstleister, beispielsweise einem Servicetechniker oder einem Hausdienst, übermittelt werden. Bei der Dienstleistung kann es sich z.B. um Wartungsarbeiten oder um Reinigungsarbeiten handeln. Die übermittelten Daten enthalten vorzugsweise Informationen, die eine eindeutige Identifikation der Vorrichtung sowie Informationen zur bestellten Dienstleistung enthält. Beispielsweise können die Daten die Adresse sowie der Standort der Vorrichtung in einem Gebäude in Klartext beinhalten. Alternativ wird jedoch nur eine Gerätenummer der Vorrichtung übertragen, wobei Adresse und Standort der Vorrichtung in einer Datenbank im elektronischen System hinterlegt sind. Die Daten zur bestellten Dienstleistung können entweder in den Daten enthalten sein, beispielsweise als Volltext oder die Daten enthalten alternativ eine für die bestellte Dienstleistung spezifische Identifikationsnummer, wobei das elektronische System eine Datenbank enthält, mit welcher die Identifikationsnummer mit der Dienstleistung verknüpft. Die Daten über die Dienstleistung sind vorzugsweise in der mindestens einen Codierkarte gespeichert und werden durch die Vorrichtung von dieser ausgelesen.

Das elektronische System generiert nach Erhalt der Daten einen entsprechenden Auftrag an den Dienstleister. Hierzu kann beispielsweise durch das elektronische System eine E-Mail mit einem Auftrag generiert und an den Dienstleister versendet werden. Der Auftrag enthält zumindest Informationen zum Standort der Vorrichtung, von welcher die Daten erhalten wurden, sowie zu der bestellten Dienstleistung. Alternativ wird durch das elektronische System eine Nachricht, beispielsweise als SMS, mit einem Link zum Auftrag verschickt, das heisst, dass der Dienstleister auf elektronischem Weg auf die Daten des Auftrags, die im elektronischen System gespeichert werden, zugreifen kann. Der Auftrag kann dabei als herunterladbare Datei, als temporäre Webseite oder ähnlich abrufbar sein. Alternativ kann der Dienstleister auch über eine Applikation, die lokal auf einem Rechner oder einem mobilen Endgerät des Dienstleisters gespeichert ist, auf den im elektronischen System gespeicherten Auftrag zugreifen.

Das elektronische System verfügt zudem über Mittel, mit denen der Dienstleister die Annahme des Auftrags quittieren kann. Dies kann beispielsweise durch Anklicken eines Links in der E-Mail oder durch Drücken einer bestimmten Schaltfläche auf der temporären Webseite oder der Applikation durch den Dienstleister realisiert werden. Sofern die Annahme des Auftrages nicht innerhalb einer vordefinierten Zeit durch den Dienstleister quittiert wird, verschickt das elektronische System eine Erinnerung des Auftrags an den Dienstleister.

Sofern die Vorrichtung über eine Anzeigevorrichtung verfügt, kann anhand dieser Anzeigevorrichtung eine Statusmeldung zur bestellten Dienstleistung angezeigt werden. Hierzu sendet das elektronische System Statusmeldungen an die Vorrichtung. Beispielsweise kann über die Anzeigevorrichtung angezeigt werden, dass die Dienstleistung bestellt wurde. Insbesondere bevorzugt ist die Anzeigevorrichtung eine LCD-Anzeige oder eine Anzeige mit elektronischem Papier auf welcher die Statusmeldung im Klartext angezeigt wird, also beispielsweise der Text "Flurreinigung bestellt" angezeigt wird.

Sobald die Dienstleistung durch den Dienstleister erledigt wurde kann dieser durch Drücken der mindestens einen Taste der Vorrichtung für eine längere, vorbestimmte Zeit, zum Bespiel während mindestens 5 Sekunden, die Erbringung der Dienstleistung bestätigen. Dadurch werden durch die Vorrichtung entsprechende Daten an das elektronische System übertragen, wobei das elektronische System den Auftrag als erledigt markiert. Falls die Vorrichtung über eine Anzeigevorrichtung verfügt, wird die Statusmeldung entsprechend angepasst (z.B. durch Anzeige von "alles in Ordnung") oder gelöscht. Alternativ kann die Erledigung des Auftrags auch über eine auf einem mobilen Endgerät des Dienstleisters gespeicherte Applikation quittiert werden, wobei die Applikation entsprechende Daten an das elektronische System übermittelt, beispielsweise über ein Mobilfunknetz.

Sollte der Dienstleister nicht im Stande sein, die Dienstleistung zu erbringen, beispielsweise weil hierzu ein Handwerker oder ein spezialisierter Techniker aufgeboten werden muss, kann über das elektronische System ein entsprechender weiterführender Auftrag generiert werden. Hierzu kann der Dienstleister beispielsweise über die auf einem Rechner oder mobilen Endgerät installierten Applikation oder über das Internet auf das elektronische System zugreifen und einen entsprechenden weiterführenden Auftrag auslösen. Die Quittierung der ausgeführten Dienstleistung erfolgt in analoger Weise durch Drücken der mindestens einen Taste für eine längere, vorbestimmte Zeit oder über die Applikation.

Vorzugsweise werden zusätzlich zu den ausgelesenen Daten Identifikationsdaten, welche der Vorrichtung zugeordnet sind, durch die Steuerungseinheit an das elektronische System übermittelt.

Bei einem Druck auf die Taste werden vorzugsweise zunächst die Daten, die auf der Codierkarte gespeichert sind, durch die Steuerungseinheit mittels der Leseeinrichtung ausgelesen und anschliessend mittels des wenigstens einen drahtlosen Kommunikationsmoduls an das elektronische System übermittelt.

Vorzugsweise ist auf der Codierkarte eine Produktnummer gespeichert. Bevorzugt sind auf der Codierkarte Informationen zum Produkt aufgedruckt.

Die aufgedruckten Informationen können beispielsweise ein Produktname, eine Abbildung des Produkts oder eine Beschreibung des Produkts sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung eines nicht erfindungsgemässen Beispiels einer Vorrichtung;
- Fig. 2: Eine schematische Darstellung einer ersten Ausführungsform einer erfindungsgemässen Vorrichtung;
- Fig. 3: Eine schematische Darstellung einer zweiten Ausführungsform einer erfindungsgemässen Vorrichtung;
- Fig. 4: Eine schematische Darstellung eines erfindungsgemässen Verfahrens;
- Figs. 5a, 5b: Eine schematische Darstellung eines weiteren nicht erfindungsgemässen Beispiels einer Vorrichtung;
- Fig. 6: einen schematischen Ablauf eines Bestellvorgangs für eine Dienstleistung mit einer erfindungsgemäßen Vorrichtung
- Fig. 7: eine schematische Darstellung einer Ausführungsform einer Leseeinrichtung für die erfindungsgemäße Vorrichtung, die über eine Mehrzahl an Kontaktpunkten verfügt.

Grundsätzlich sind in den Figuren gleiche Teile mit gleichen Bezugszeichen versehen.

### Wege zur Ausführung der Erfindung

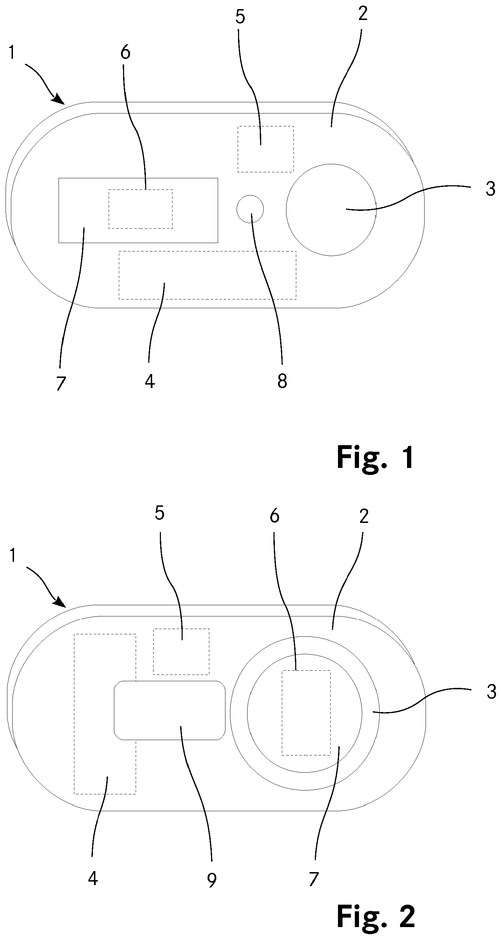

Die Fig. 1 zeigt schematisch ein erstes Beispiel einer nicht erfindungsgemässen Vorrichtung 1. Die Vorrichtung 1 verfügt über ein festes Gehäuse 2. Komponenten, welche innerhalb des Gehäuses 2 angeordnet sind, werden in der Figur gestrichelt dargestellt. Auf einer Seitenfläche des Gehäuses 2 ist eine Taste 3, welche im gezeigten Ausführungsbeispiel als Drucktaste ausgebildet ist, angeordnet. Ferner ist auf dem Gehäuse 2 neben der Taste 3 ein Befestigungsbereich 7 für eine Codierkarte angeordnet. Zwischen dem Befestigungsbereich 7 und der Taste 3 befindet sich eine Leuchtdiode 8. Unterhalb des Befestigungsbereichs 7 ist eine Leseeinrichtung 6 für die Codierkarte angeordnet. Mittels dieser Leseeinrichtung 6 können Daten aus einer Codierkarte, der auf dem Befestigungsbereich 7 befestigt ist, ausgelesen werden. Der Befestigungsbereich 7 ist als Fläche ausgebildet, welche zum Aufkleben einer Codierkarte mit Klebefläche geeignet ist. Die Vorrichtung 1 verfügt ferner über eine Steuerungseinheit 4, welche mit der Taste 3, der Leuchtdiode 8 und mit der Leseeinrichtung 6 elektrisch verbunden ist. Die Steuerungseinheit 4 ist ferner mit einem drahtlosen Kommunikationsmodul 5 elektrisch verbunden. Zur Stromversorgung verfüg die Vorrichtung ferner über eine Stromquelle (nicht gezeigt), beispielsweise einer Knopfbatterie. Bei Betätigung der Taste 3 werden die von der Leseeinrichtung 6 ausgelesenen Daten einer auf dem Befestigungsbereich 7 befestigten Codierkarte durch die Steuerungseinheit 4 mittels des drahtlosen Kommunikationsmoduls 5 an ein elektronisches System (nicht gezeigt) übermittelt. Die Steuerungseinheit zeigt einem Benutzer anschliessend mittels der Leuchtdiode 8 an, ob die Übertragung erfolgreich war oder fehlgeschlagen ist, beispielsweise durch Aufleuchten in einer bestimmten Farbe oder durch bestimmte Blinkfolgen. Durch die Leuchtdiode kann die Steuerungseinheit auch Warnungen oder Betriebszustände signalisieren, beispielsweise bei nachlassender Batterieleistung.

Die Fig. 2 zeigt eine erste Ausführungsform einer erfindungsgemässen Vorrichtung 1 in einer schematischen Darstellung. Wiederum sind Komponenten, welche innerhalb des Gehäuses 2 angeordnet sind, gestrichelt dargestellt. Bei der gezeigten Ausführungsform befindet sich der Befestigungsbereich 7 auf der Taste 3. Entsprechend ist auch die Leseeinrichtung 6 im Bereich der Taste 3 angeordnet. Als Anzeigevorrichtung ist eine LCD-Anzeige 9 vorgesehen, welche nebst Statusangaben zur Übermittlung der Daten auch die Daten anzeigen kann, welche übermittelt wurden.

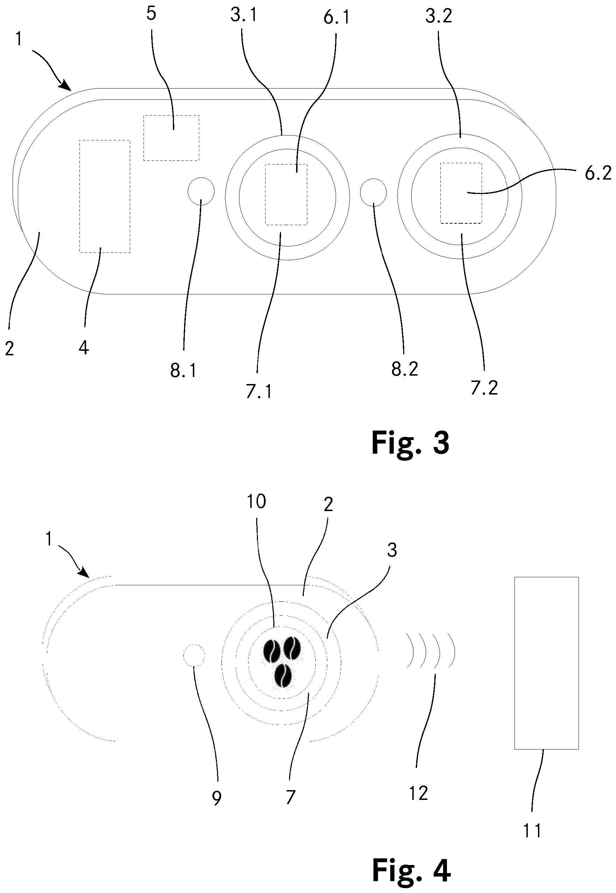

Die Fig. 3 zeigt eine zweite Ausführungsform der erfindungsgemässen Vorrichtung 1, welche über zwei Tasten 3.1, 3.2 verfügt. Wiederum sind Komponenten, welche innerhalb des Gehäuses 2 angeordnet sind, gestrichelt dargestellt. Wie in der zweiten Ausführungsform gemäss Fig. 2 befinden sich die Befestigungsbereiche 7.1, 7.2 für Codierkarten auf den Tasten 3.1, 3.2. Jedem Befestigungsbereich 7.1, 7.2 ist eine Leseeinrichtung 6.1, 6.2 für Codierkarten zugeordnet, wobei diese Leseeinrichtungen 6.1, 6.2 derart angeordnet und ausgestaltet sind, dass diese jeweils nur Daten von auf dem ihnen zugeordneten Befestigungsbereich 7.1, 7.2 angebrachten Codierkarte auslesen können. Ferner ist jeder Taste 3.1, 3.2 eine Leuchtdiode 8.1, 8.2 zugeordnet, mit denen die Steuerungseinheit 4 die erfolgreiche Übermittlung der entsprechenden Daten signalisieren kann.

Die Fig. 4 zeigt schematisch eine Ausführungsform des erfindungsgemässen Verfahrens. Eine Codierkarte 10 wird auf den Befestigungsbereich 7 befestigt. Bei der gezeigten Ausführungsform ist die Codierkarte 10 als RFID-Transponder ausgestaltet, die in der Form einer Klebeetikette vorliegt, welche sich einfach und schnell auf den Befestigungsbereich 7 kleben lässt. Hierzu verfügt die Codierkarte 10 über eine entsprechende Fläche mit Klebstoff. Ferner sind auf der als RFID-Transponder ausgestalteten Codierkarte 10 Informationen aufgedruckt, welche auf diesem gespeicherte Daten für einen Benutzer identifizierbar machen. Beim gezeigten Beispiel sind dies Kaffeebohnen, welche dem Benutzer signalisieren, dass durch eine Betätigung der Taste eine Bestellung für Kaffee an ein elektronisches Bestellsystem übermittelt wird. Nach Betätigung der Taste 3 durch einen Benutzer werden die Daten aus der als RFID-Transponder ausgestalteten Codierkarte 10 ausgelesen und mittels Funksignal 12 an das elektronische System 11 übermittelt.

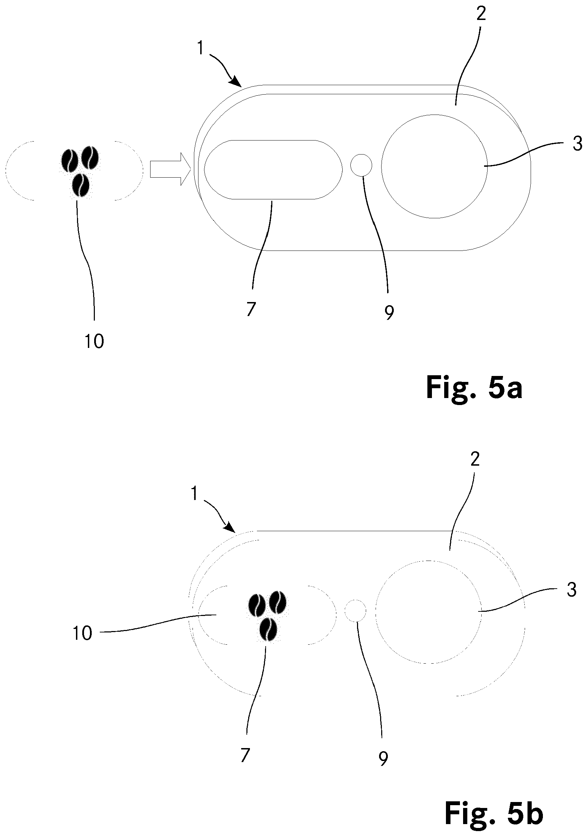

Die Figs. 5a und 5b zeigen ein zweites Beispiel eines nicht erfindungsgemässen Beispiels einer Vorrichtung 1. Bei dieser Ausführungsform ist die Befestigungsfläche als Fenster auf einer Seitenfläche des Gehäuses 2 ausgestaltet, in welches von der Seite her eine Codierkarte 10 durch einen Schlitz eingeführt werden kann. Die Seitenwandungen des Fensters sind hierbei hinterschnitten, so dass die Codierkarte 10 einfach in das Fenster hineingeschoben werden kann und aus diesem nicht herausfällt. Um ein unbeabsichtigtes Herausschieben zu verhindern, kann der Schlitz über entsprechende Mittel verfügen, um diesen zu sichern.

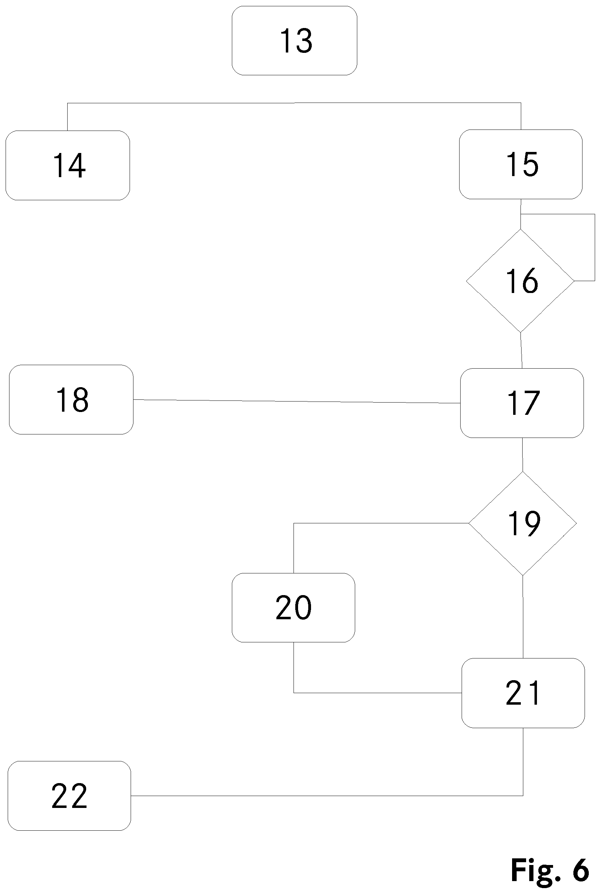

Die Fig. 6 zeigt einen schematischen Ablauf eines Bestellvorgangs für eine Dienstleistung. Beim Bestellschritt 13 wird durch Drücken der mindestens einen Taste 3 einer erfindungsgemässen Vorrichtung 1 eine Dienstleistung bestellt, wobei die Vorrichtung 1 Daten, welche mit der Adresse und dem Standort, an welchem sich die Vorrichtung 1 befindet, sowie die Art der bestellten Dienstleistung an ein elektronisches System 11 übermittelt. Die Art der Dienstleistung ist dabei in der mindestens einen Codierkarte 10 hinterlegt oder gespeichert.

Ferner wird eine Bestellmeldung 14 generiert, welche zum Beispiel auf der Anzeige 9 der Vorrichtung 1 angezeigt werden kann. Hierbei kann es sich um Klartext handeln, falls die Anzeige 9 ein LCD-Display oder elektronisches Papier ist.

Das elektronische System 11 geniert in einem Auftragsgenerierungsschritt 15 einen Auftrag für den entsprechenden Dienstleister und verschickt diesen Auftrag, beispielsweise per E-Mail. Nach einer vorbestimmten Zeit überprüft das elektronische System 11 in einem Überprüfungsschritt 16, ob der Dienstleister die Annahme des Auftrags quittiert hat. Ist dies nicht der Fall, wird eine Erinnerung zum Auftrag an den Dienstleister verschickt.

Der Dienstleister quittiert die Annahme des Auftrags in einem Quittierungsschritt 17, wobei das elektronische System 11 eine Bestätigungsmeldung 18 an die Vorrichtung 1 schickt, welche auf der Anzeige 9 angezeigt wird.

Stellt der Dienstleister vor Ort im Ausführungsschritt 19 fest, dass er die Dienstleistung nicht selbst erbringen kann, beispielsweise weil hierzu ein spezialisierter Techniker oder eine Spezialreinigungsfirma (nachfolgend "weiterer Dienstleister") nötig ist, teilt er diese dem elektronischen System 11 durch eine auf einem Rechner oder einem mobilen Endgerät installierten Applikation oder alternativ über eine Webseite mit. Das elektronische System erstellt und verschickt in Folge einen weiterführenden Auftrag 20 an den weiteren Dienstleister.

Nach Erbringung der Dienstleistung, das heisst nach Erledigung des Auftrags oder des weiterführenden Auftrags 20, bestätigt der Dienstleister oder der weitere Dienstleister in einem Bestätigungsschritt 21, dass die Dienstleistung erbracht wurde. Das elektronische System 11 markiert den Auftrag oder den weiterführenden Auftrag 20 als erledigt und sendet eine entsprechende Erledigungsmeldung 22 an die Vorrichtung 1. Die Anzeige 9 der Vorrichtung 1 zeigt dann entsprechend die Meldung "alles in Ordnung" oder gar nichts mehr an.

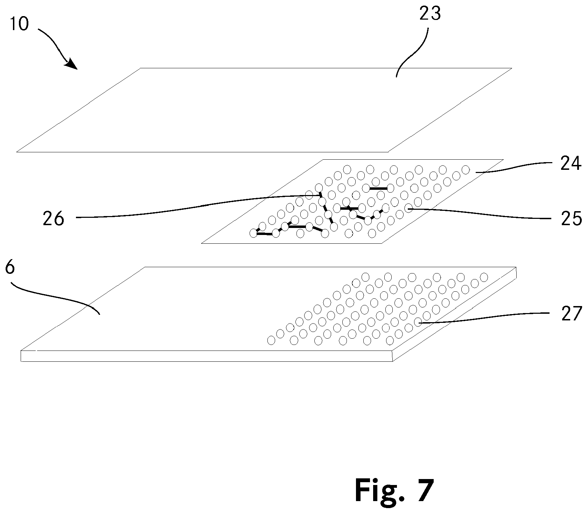

Die Fig. 7 zeigt eine schematische Darstellung einer Leseeinrichtung 6, die über eine Mehrzahl an Kontaktpunkten 27 verfügt. Beim Befestigen einer Codierkarte 10 berühren die Kontaktpunkte 27 entsprechende elektrisch leitende Flächen 25, die auf einer Folie 24 der Codierkarte 10 angeordnet sind. Zwischen den elektrisch leitenden Flächen 25 sind teilweise Leiterbahnen 26 angeordnet, die zwei oder mehr der elektrisch leitenden Flächen miteinander verbinden. Durch eine unterschiedliche Anordnung dieser Leiterbahnen 26 lassen sich Daten auf der Codierkarte 10 hinterlegen. Die Folie 24 ist an einer Trägerkarte 23, die beispielsweise aus Papier, Karton oder einem Polymer besteht, angebracht. Die Trägerkarte 23 und die Folie 24 bilden zusammen die Codierkarte 10.

Sowohl die elektrisch leitenden Flächen 25 und/oder die Leiterbahnen 26 sind vorzugsweise mittels einer elektrisch leitenden Tinte auf der Folie 24 aufgedruckt.

## Patentansprüche

1. Vorrichtung zum Übertragen von Daten an ein elektronisches System (11), insbesondere zum Übertragen einer Produktnummer an ein elektronisches Bestellsystem, umfassend ein Gehäuse (2) mit mindestens einer Taste (3; 3.1, 3.2), eine Steuerungseinheit (4), wenigstens ein drahtloses Kommunikationsmodul (5), mit welchem die Vorrichtung (1) Daten an das elektronische System (11) übertragen kann, sowie mit mindestens einer Leseeinrichtung (6; 6.1, 6.2) für Codierkarten (10), wobei das Gehäuse (2) wenigstens einen Befestigungsbereich (7) zum lösbaren Befestigen einer Codierkarte (10), auf welcher die Daten hinterlegt oder gespeichert sind, aufweist, wobei die Steuerungseinheit (4) derart ausgebildet ist, dass diese mittels der mindestens einen Leseeinrichtung (6; 6.1, 6.2) die Daten aus einer am wenigstens einen Befestigungsbereich (7) angebrachten Codierkarte (10) ausliest und diese bei Betätigung der mindestens einen Taste (3; 3.1, 3.2) mittels des drahtlosen Kommunikationsmoduls (5) an das elektronische System (11) übermittelt, **dadurch gekennzeichnet, dass** der mindestens eine Befestigungsbereich (7) auf einer Oberfläche der mindestens einen Taste (3) angeordnet ist.

2. Vorrichtung gemäss Anspruch 1, **dadurch gekennzeichnet, dass** die mindestens eine Leseeinrichtung (6; 6.1, 6.2) eine Leseeinrichtung für RFID-Transponder ist, welche die Daten aus einer am wenigstens einen Befestigungsbereich (7) angebrachten Codierkarte (10), die als RFID-Transponder ausgestaltet ist, ausliest.

3. Vorrichtung gemäss Anspruch 1, **dadurch gekennzeichnet, dass** die mindestens eine Leseeinrichtung (6; 6.1, 6.2) über Kontaktpunkte aus einem elektrisch leitfähigen Material aufweist, welche zumindest teilweise mit elektrisch leitenden Flächen einer am wenigstens einen Befestigungsbereich (7) angebrachten Codierkarte (10) in Berührung stehen.

4. Vorrichtung gemäss einem der Ansprüche 1 bis 3, **dadurch gekennzeichnet, dass** die Steuerungseinheit (4) derart ausgebildet ist, dass durch Betätigung der Taste (3; 3.1, 3.2) mittels der Leseeinrichtung (5) die Daten aus der am wenigstens einen Befestigungsbereich (7) angebrachten Codierkarte (10) ausgelesen und mittels des drahtlosen Kommunikationsmoduls (5) an das elektronische System (11) übermittelt werden.

5. Vorrichtung gemäss einem der Ansprüche 1 bis 4, **dadurch gekennzeichnet, dass** der mindestens eine Befestigungsbereich (7) als eine zum Aufkleben einer mit einer Klebefläche versehenen Codierkarte (10) ausgebildete Oberfläche ausgestaltet ist.

6. Vorrichtung gemäss einem der Ansprüche 1 bis 5, **dadurch gekennzeichnet, dass** der mindestens eine Befestigungsbereich (7) über Formschlusselemente, insbesondere über Nuten (12), verfügt, mit denen sich eine Codierkarte (10) formschlüssig am Gehäuse (2) lösbar befestigen lässt.

7. Vorrichtung gemäss einem der Ansprüche 1 bis 6, **dadurch gekennzeichnet, dass** am Gehäuse (2) eine Anzeigevorrichtung (8; 9), insbesondere eine Leuchtdiode (8), angeordnet ist, welche von der Steuerungseinheit (4) angesteuert wird, um einem Benutzer den Status der Übermittlung der Daten anzuzeigen, insbesondere die erfolgreiche Übermittlung der Daten an das elektronische System (11).

8. Vorrichtung gemäss einem der Ansprüche 1 bis 7, **dadurch gekennzeichnet, dass** die Steuerungseinheit (4) derart ausgestaltet ist, dass diese zusätzlich Identifikationsdaten, welche der Vorrichtung (2) zugeordnet sind, mit den von der am wenigstens einen Befestigungsbereich (7) angebrachten Codierkarte (10) ausgelesenen Daten an das elektronische System (11) übermittelt.

9. Vorrichtung gemäss einem der Ansprüche 1 bis 8, **dadurch gekennzeichnet, dass** das wenigstens eine drahtlosen Kommunikationsmodul (5) eine Datenübertragung mittels Funkwellen ermöglicht, insbesondere gemäss dem IEEE 802.11 Standard, dem IEEE 802.15.1 Standard und/oder gemäss dem Long Range Wide Area Network Standard.

10. Vorrichtung gemäss einem der Ansprüche 1 bis 9, **dadurch gekennzeichnet, dass** die Vorrichtung (1) über mindestens zwei Tasten (3.1, 3.2) verfügt, wobei jeder Taste (3.1, 3.2) auf dem Gehäuse (2) ein Befestigungsbereich (7.1, 7.2) sowie eine Leseeinrichtung (6.1, 6.2) für Codierkarten (10) zugeordnet ist, und wobei die Leseeinrichtungen (6.1, 6.2) derart angeordnet und ausgestaltet sind, dass jede Leseeinrichtung (6.1, 6.2) jeweils nur Daten von einem der entsprechenden Taste (3.1, 3.2) zugeordneten Befestigungsbereich (7.1, 7.2) angebrachten Codierkarte (10) ausliest.

11. Verfahren zum Übertragen von Daten an ein elektronisches System (11), insbesondere zum Übertragen einer Produktnummer an ein elektronisches Bestellsystem, umfassend die Schritte:
a) Befestigen einer Codierkarte (10) auf einen Befestigungsbereich (7; 7.1, 7.2) einer Vorrichtung (1), insbesondere einer Vorrichtung (1) gemäss einem der Ansprüche 1 bis 10, wobei der Befestigungsbereich (7; 7.1, 7.2) auf einer Oberfläche mindestens einer Taste (3; 3.1, 3.2) der Vorrichtung (1) angeordnet ist und wobei auf der Codierkarte (10) Daten, insbesondere Daten zu einem Produkt hinterlegt oder gespeichert sind;
b) Auslesen der Daten, die auf der Codierkarte (10) hinterlegt oder gespeichert sind, durch eine Steuerungseinheit (4) der Vorrichtung (1) mittels wenigstens einer Leseeinrichtung (6; 6.1, 6.2) für Codierkarten (10);
c) Übermittlung der ausgelesenen Daten durch die Steuerungseinheit (4) an das elektronische System (11) mittels wenigstens eines drahtlosen Kommunikationsmoduls (5) bei Betätigung der Taste (3; 3.1, 3.2).

12. Verfahren gemäss Anspruch 11, **dadurch gekennzeichnet, dass** zusätzlich zu den ausgelesenen Daten Identifikationsdaten, welche der Vorrichtung (1) zugeordnet sind, durch die Steuerungseinheit (4) an das elektronische System (11) übermittelt werden.

13. Verfahren gemäss einem der Ansprüche 11 oder 12, **dadurch gekennzeichnet, dass** bei Betätigung der Taste (3; 3.1, 3.2) zunächst die Daten, die auf einer auf dem Befestigungsbereich (7; 7.1, 7.2) befestigten Codierkarte(10) hinterlegt sind, durch die Steuerungseinheit (4) mittels der Leseeinrichtung (6; 6.1, 6.2) ausgelesen und anschliessend mittels des wenigstens einen drahtlosen Kommunikationsmoduls (5) übermittelt werden.

14. Verfahren gemäss einem der Ansprüche 11 bis 13, **dadurch gekennzeichnet, dass** auf der Codierkarte (10) eine Produktnummer gespeichert ist und Informationen zum Produkt auf dieser aufgedruckt sind.

## Claims

1. Apparatus for transmitting data to an electronic system (11), in particular for transmitting a product number to an electronic ordering system, comprising a housing (2) with at least one button (3; 3.1, 3.2), a control unit (4), at least one wireless communication module (5) which can be used by the apparatus (1) to transmit data to the electronic system (11), and at least one reading device (6; 6.1, 6.2) for coding cards (10), wherein the housing (2) has at least one fastening region (7) for releasably fastening a coding card (10) on which the data are stored or saved, wherein the control unit (4) is designed in such a manner that it uses the at least one reading device (6; 6.1, 6.2) to read the data from a coding card (10) fitted to the at least one fastening region (7) and transmits these data to the electronic system (11) by means of the wireless communication module (5) upon actuation of the at least one button (3; 3.1, 3.2), **characterized in that** the at least one fastening region (7) is arranged on a surface of the at least one button (3).

2. Apparatus according to Claim 1, **characterized in that** the at least one reading device (6; 6.1, 6.2) is a reading device for RFID transponders which reads the data from a coding card (10) which is fitted to the at least one fastening region (7) and is in the form of an RFID transponder.

3. Apparatus according to Claim 1, **characterized in that** the at least one reading device (6; 6.1, 6.2) has contact points made from an electrically conductive material which are at least partially in contact with electrically conductive surfaces of a coding card (10) fitted to the at least one fastening region (7).

4. Apparatus according to one of Claims 1 to 3, **characterized in that** the control unit (4) is designed in such a manner that, by virtue of actuation of the button (3; 3.1, 3.2), the data are read from the coding card (10) fitted to the at least one fastening region (7) by means of the reading device (5) and are transmitted to the electronic system (11) by means of the wireless communication module (5).

5. Apparatus according to one of Claims 1 to 4, **characterized in that** the at least one fastening region (7) is in the form of a surface designed to adhesively bond a coding card (10) provided with an adhesive surface.

6. Apparatus according to one of Claims 1 to 5, **characterized in that** the at least one fastening region (7) has form-fitting elements, in particular grooves (12), which can be used to releasably fasten a coding card (10) to the housing (2) in a form-fitting manner.

7. Apparatus according to one of Claims 1 to 6, **characterized in that** a display apparatus (8; 9), in particular a light-emitting diode (8), is arranged on the housing (2) and is controlled by the control unit (4) to display the data transmission status to a user, in particular the successful transmission of the data to the electronic system (11).

8. Apparatus according to one of Claims 1 to 7, **characterized in that** the control unit (4) is configured in such a manner that it additionally transmits identification data which are assigned to the apparatus (2), with the data read from the coding card (10) fitted to the at least one fastening region (7), to the electronic system (11).

9. Apparatus according to one of Claims 1 to 8, **characterized in that** the at least one wireless communication module (5) makes it possible to transmit data by means of radio waves, in particular according to the IEEE 802.11 standard, the IEEE 802.15.1 standard and/or according to the Long Range Wide Area Network standard.

10. Apparatus according to one of Claims 1 to 9, **characterized in that** the apparatus (1) has at least two buttons (3.1, 3.2), wherein each button (3.1, 3.2) on the housing (2) is assigned a fastening region (7.1, 7.2) and a reading device (6.1, 6.2) for coding cards (10), and wherein the reading devices (6.1, 6.2) are arranged and configured in such a manner that each reading device (6.1, 6.2) respectively reads only data from a coding card (10) fitted to a fastening region (7.1, 7.2) assigned to the corresponding button (3.1, 3.2).

11. Method for transmitting data to an electronic system (11), in particular for transmitting a product number to an electronic ordering system, comprising the steps of:
a) fastening a coding card (10) to a fastening region (7; 7.1, 7.2) of an apparatus (1), in particular an apparatus (1) according to one of Claims 1 to 10, wherein the fastening region (7; 7.1, 7.2) is arranged on a surface of at least one button (3; 3.1, 3.2) of the apparatus (1), and wherein data, in particular data relating to a product, are stored or saved on the coding card (10);
b) reading the data which are stored or saved on the coding card (10) by means of a control unit (4) of the apparatus (1) using at least one reading device (6; 6.1, 6.2) for coding cards (10);
c) transmitting the data which have been read to the electronic system (11) by means of the control unit (4) using at least one wireless communication module (5) upon actuation of the button (3; 3.1, 3.2).

12. Method according to Claim 11, **characterized in that**, in addition to the data which have been read, identification data assigned to the apparatus (1) are transmitted to the electronic system (11) by means of the control unit (4).

13. Method according to either of Claims 11 and 12, **characterized in that**, upon actuation of the button (3; 3.1, 3.2), the data which are stored on a coding card (10) fastened to the fastening region (7, 7.1, 7.2) are first of all read by means of the control unit (4) using the reading device (6; 6.1, 6.2) and are then transmitted by means of the at least one wireless communication module (5).

14. Method according to one of Claims 11 to 13, **characterized in that** a product number is saved on the coding card (10) and information relating to the product is printed on said card.

## Revendications

1. Arrangement pour la transmission de données à un système électronique (11), notamment pour la transmission d'un numéro de produit à un système de commande électronique, comprenant un boîtier (2) doté d'au moins une touche (3 ; 3.1, 3.2), une unité de commande (4), au moins un module de communication sans fil (5), avec lequel l'arrangement (1) peut transmettre des données au système électronique (11), et comprenant aussi au moins un dispositif de lecture (6 ; 6.1, 6.2) pour des cartes codées (10), le boîtier (2) possédant au moins une zone de fixation (7) servant à la fixation amovible d'une carte codée (10) sur laquelle sont stockées ou mémorisées les données, l'unité de commande (4) étant configurée de telle sorte qu'au moyen de celle-ci, l'au moins un dispositif de lecture (6 ; 6.1, 6.2) lit les données à partir d'une carte codée (10) appliquée sur l'au moins une zone de fixation (7) et communique celles-ci au système électronique (11) au moyen du module de communication sans fil (5) lors de l'actionnement de l'au moins une touche (3 ; 3.1, 3.2), **caractérisé en ce que** l'au moins une zone de fixation (7) est disposée sur une surface de l'au moins une touche (3).

2. Arrangement selon la revendication 1, **caractérisé en ce que** l'au moins un dispositif de lecture (6 ; 6.1, 6.2) est un dispositif de lecture pour des transpondeurs RFID qui lit données à partir d'une carte codée (10), qui est réalisée sous la forme d'un transpondeur RFID, appliquée sur l'au moins une zone de fixation (7).

3. Arrangement selon la revendication 1, **caractérisé en ce que** l'au moins un dispositif de lecture (6 ; 6.1, 6.2) dispose de points de contact en un matériau électriquement conducteur, lesquels sont au moins partiellement en contact avec des surfaces électriquement conductrices d'une carte codée (10) appliquée sur l'au moins une zone de fixation (7).

4. Arrangement selon l'une des revendications 1 à 3, **caractérisé en ce que** l'unité de commande (4) est configurée de telle sorte que l'actionnement de la touche (3 ; 3.1, 3.2) a pour effet que les données sont lues à partir de la carte codée (10) appliquée sur l'au moins une zone de fixation (7) au moyen du dispositif de lecture (5) et sont communiquées au système électronique (11) au moyen du module de communication sans fil (5).

5. Arrangement selon l'une des revendications 1 à 4, **caractérisé en ce que** l'au moins une zone de fixation (7) est réalisée sous la forme d'une surface configurée pour le collage d'une carte codée (10) pourvue d'une surface adhésive.

6. Arrangement selon l'une des revendications 1 à 5, **caractérisé en ce que** l'au moins une zone de fixation (7) dispose d'éléments de complémentarité de formes, notamment de rainures (12), avec lesquels une carte codée (10) peut être fixée de manière amovible sur le boîtier (2) par complémentarité de formes.

7. Arrangement selon l'une des revendications 1 à 6, **caractérisé en ce qu'**un arrangement indicateur (8 ; 9), notamment une diode électroluminescente (8), est disposé sur le boîtier (2), lequel est commandé par l'unité de commande (4) pour indiquer à un utilisateur l'état de la communication des données, notamment la communication réussie des données au système électronique (11).

8. Arrangement selon l'une des revendications 1 à 7, **caractérisé en ce que** l'unité de commande (4) est configurée de telle sorte que celle-ci communique en plus au système électronique (11) des données d'identification, lesquelles sont associées à l'arrangement (2), conjointement avec les données lues depuis la carte codée (10) appliquée sur l'au moins une zone de fixation (7).

9. Arrangement selon l'une des revendications 1 à 8, **caractérisé en ce que** l'au moins un module de communication sans fil (5) rend possible une transmission de données au moyen d'ondes radioélectriques, notamment conformément à la norme IEEE 802.11, à la norme IEEE 802.15.1 et/ou conformément à la norme LoRaWan (Long range Wide area network - Réseau de zone étendue à longue portée) .

10. Arrangement selon l'une des revendications 1 à 9, **caractérisé en ce que** l'arrangement (1) dispose d'au moins deux touches (3.1, 3.2), une zone de fixation (7.1, 7.2) ainsi qu'un dispositif de lecture (6.1, 6.2) pour des cartes codées (10) étant associés à chaque touche (3.1, 3.2) sur le boîtier (2), et les dispositifs de lecture (6.1, 6.2) étant disposés et configurés de telle sorte que chaque dispositif de lecture (6.1, 6.2) ne lit respectivement que des données d'une carte codée (10) appliquée sur la zone de fixation (7.1, 7.2) associée à la touche (3.1, 3.2) respective.

11. Procédé pour la transmission de données à un système électronique (11), notamment pour la transmission d'un numéro de produit à un système de commande électronique, comprenant les étapes suivantes :
a) fixation d'une carte codée (10) à une zone de fixation (7 ; 7.1, 7.2) d'un arrangement (1), notamment d'un arrangement (1) selon l'une des revendications 1 à 10, la zone de fixation (7 ; 7.1, 7.2) étant disposée sur une surface d'au moins une touche (3 ; 3.1, 3.2) de l'arrangement (1) et des données, notamment des données à propos d'un produit, étant stockées ou mémorisées sur la carte codée (10) ;
b) lecture des données qui sont stockées ou mémorisées sur la carte codée (10) par une unité de commande (4) de l'arrangement (1) au moyen d'au moins un dispositif de lecture (6 ; 6.1, 6.2) pour des cartes codées (10) ;
c) communication des données lues par l'unité de commande (4) au système électronique (11) au moyen d'au moins un module de communication sans fil (5) lors de l'actionnement de la touche (3 ; 3.1, 3.2).

12. Procédé selon la revendication 11, **caractérisé en ce que** des données d'identification, lesquelles sont associées à l'arrangement (1), sont communiquées par l'unité de commande (4) au système électronique (11) en plus des données lues.

13. Procédé selon l'une des revendications 11 ou 12, **caractérisé en ce que** lors de l'actionnement de la touche (3 ; 3.1, 3.2), les données qui sont stockées sur une carte codée (10) fixée sur la zone de fixation (7 ; 7.1, 7.2) sont tout d'abord lues par l'unité de commande (4) au moyen du dispositif de lecture (6 ; 6.1, 6.2) et sont ensuite communiquées au moyen de l'au moins un module de communication sans fil (5).

14. Procédé selon l'une des revendications 11 à 13, **caractérisé en ce qu'**un numéro de produit est mémorisé sur la carte codée (10) et des informations à propos du produit sont imprimées sur celle-ci.
